# EUROPÄISCHE PATENTSCHRIFT

(11) **EP 0 483 660 B1**
(45) Veröffentlichungstag und Bekanntmachung des Hinweises auf die Patenterteilung: **24.01.1996**
(21) Anmeldenummer: 91118103.0
(22) Anmeldetag: 24.10.1991
(51) Int. Cl.: F16B 19/06

(54) **Passniet für hochbeanspruchte Nietverbindungen**
Calibrated rivet for highly stressed rivet assemblies
Rivet calibré pour assemblages rivés fortement sollicités

(30) Priorität: 02.11.1990 DE 4034862
(43) Veröffentlichungstag der Anmeldung: 06.05.1992
(73) Patentinhaber: HUCK INTERNATIONAL GmbH & CO., 37520 Osterode (DE)
(72) Erfinder: Mages, Walter J., Dr.-Ing., W-6320 Alsfeld (DE); Turlach, Gerhard, Dipl.-Ing., W-3360 Osterode (DE)
(74) Vertreter: Rehberg, Elmar, Dipl.-Ing.

(56) Entgegenhaltungen:
- EP-A- 0 179 431
- DE-A- 3 215 228
- GB-A- 2 145 185
- US-A- 2 955 505
- US-A- 4 326 825
- BEITZ 'Dubbel-Taschenbuch f r den Maschinenbau' 1987 , SPRINGER , BERLIN , DE

## Beschreibung

Die Erfindung bezieht sich auf einen Paßniet für hochbeanspruchte Nietverbindungen, der einen in seiner Länge auf die Dicke der beiden zu verbindenden Bauteile abgestimmten Schaft und daran anschließend einen mit einem Schließring zusammenwirkenden Schließteil mit auf dem Umfang vorgesehenen im wesentlichen V-förmigen Rillen aufweist, wobei sich ein die Grunddurchmesser der Rillen verbindender Hüllmantel vom Kopf des Paßniets in Richtung auf sein entgegengesetztes freies Ende hin konisch erweitert und die Rillen auf dem Schließteil in der gleichen Richtung abnehmende Rillenbreite und zunehmende Asymmetrie des Rillenprofils aufweisen.

Ein derartiger Paßniet ist aus der DE-PS 32 15 228 bekannt. Der Paßniet weist im Anschluß an den Schließteil mit den Rillen eine eine einzige Sollbruchstelle bildende Abreißrille und einen sich daran anschließenden Abreißteil auf. Die Rillen auf dem Umfang des Schließteils weisen in Richtung vom Kopf des Paßniets auf sein entgegengesetztes freies Ende zu V-förmigen Querschnitt mit in der gleichen Richtung abnehmenden Rillenwinkeln auf, so daß sich in dieser Richtung eine stufenweise abnehmende Rillenbreite ergibt, wenn die Vorsprünge zwischen den Rillen auf einem zylindrischen Hüllmantel enden. In Verbindung mit einem die Grunddurchmesser der Rillen verbindenden Hüllmantel, der sich vom Kopf des Paßniets in Richtung auf sein entgegengesetztes freies Ende hin konisch erweitert, nimmt die Rillentiefe in dieser Richtung ab. Außerdem sind die V-förmigen Querschnitte der einzelnen Rillen in dieser Richtung unterschiedlich schräg gestellt angeordnet, so daß sich eine zunehmende Asymmetrie des Rillenprofils in Richtung auf das freie Ende des Schließteils ergibt.

Bei besonderen Einsatzfällen, bei denen die zu verspannenden Bauteile einer Klaffbewegung unterliegen, also einer Verschwenkbewegung der Bauteile gegeneinander um eine in ihrer Berührebene liegende Achse, kann eine vorzeitige Schädigung des Paßniets im Bereich des Schließteils eintreten, so daß die Dauerhaltbarkeit beeinträchtigt ist. Solche Beanspruchungen können z. B. bei Strukturen an Flugzeugen auftreten. Bei Überbelastung besteht die Gefahr von Brüchen an solchen Paßnieten.

Aus der US-PS 3 915 053 ist ein weiterer Paßniet bekannt, bei dem auch eine einzige Abreißrille als Sollbruchstelle vorgesehen ist, so daß die Länge des Schafts des Paßniets auf die Dicke der miteinander zu verbindenden Bauteile abgestimmt ist. Somit sind für unterschiedliche Bauteildicken in ihrem Schaft unterschiedlich lang ausgebildete Paßniete erforderlich. Um die Belastung am Schließteil und am Schließring möglichst gleichmäßig über die axiale Erstreckung der Rillen des Schließteils zu verteilen, wird der Querschnitt der Rillen vom Schaft in Richtung auf die Abreißrille hin vergrößert und/oder auch die Tiefe der Rillen - radial gesehen - in dieser Richtung vergrößert. Damit ergibt sich ein die Grunddurchmesser der Rillen verbindender Hüllmantel, der sich vom freien Ende des Paßniets in Richtung auf den Kopf bzw. Schaft hin konisch erweitert. Der Hüllmantel verläuft also umgekehrt konisch wie bei dem Paßniet der eingangs beschriebenen Art. In Richtung vom Kopf zur Abreißrille wird jedoch zusätzlich auch hier die Rillenbreite vergrößert. Eine solche Ausbildung erleichtert das Aufsetzen des zu verformenden Schließrings und des Spannwerkzeugs. Das Einfließen des Materials des Schließrings in die Rillen ist jedoch ungünstig, weil die dem Kopf benachbarten Rillen den kleineren Querschnitt aufweisen, während das Material des Schließrings benachbart zu der Abreißrille der stärksten Verformung unterliegt, also hier am besten fließt.

Die US 4,326,825 zeigt ein Verbindungselement für zwei miteinander zu verbindende Bauteile, welches relativ hohe Scherkräfte und vergleichsweise geringere Axialkräfte aufzunehmen hat. Es ist ein mit einem Kopf versehener Schaft vorgesehen, der durch die zusammenzufügenden Bauteile geführt wird. Diesem Schaft ist ein Schließring zugeordnet. Wesentliches Merkmal dieses Schaftes ist ein Übergangsbereich außerhalb der beiden miteinander zu verbindenden Bauteile, an den sich ein Gewindebereich oder ein Bereich mit umlaufenden Rillen anschließt, an dem der Schließteil angreift. Dieser Übergangsbereich erbringt eine erhebliche Durchmesserreduzierung. Der Übergangsbereich wird abgerundet ausgebildet und kaltverfestigt. Er bleibt in jedem Fall außer Kontakt zu dem Schließteil, auch in dessen aufgesetztem Endzustand. Der Schließteil kann über ein Gewinde aufgeschraubt werden oder mit Hilfe eines Verformungswerkzeuges auch fließend in den Gewindeteil eintreten. Auch dabei bleibt der Übergangsbereich jedoch frei. Dieses Verbindungselement ermöglicht es somit, relativ große Scherkräfte bei relativ kleinen Axialbelastungen aufzunehmen und trotzdem das Gewicht des Verbindungselementes klein zu halten. Die Ausbildung des Verbindungselementes zielt darauf ab, einer Alterung entgegenzuwirken.

Der Erfindung liegt die Aufgabe zugrunde, an dem eingangs beschriebenen Paßniet die dynamische Tragfähigkeit zu erhöhen, um auf diese Art und Weise auch die Lebensdauer der Verbindung zwischen dem Paßniet und den Bauteilen selbst bei ungünstigen Klaffbeanspruchungen zu verbessern.

Dies wird dadurch erreicht, daß die am Schließteil des Paßniets im Anschluß an den Schaft in Richtung auf sein freies Ende angeordnete erste Rille im Bereich ihres Grunddurchmessers eine gerundete Formgebung aufweist, deren Bereich kaltverfestigt ist. Die gerundete Formgebung soll aus einem oder mehreren Radien bestehen. Von besonderer Bedeutung in Verbindung mit der gerundeten Formgebung ist jedoch die Kaltverfestigung der ersten Rille zumindest im Bereich des Grunddurchmessers bzw. der gerundeten Formgebung. Durch diese Kaltverfestigung werden zwei Effekte erreicht. Zum einen wird die dynamische Tragfähigkeit des Paßniets erhöht, und zwar an einer Stelle, an der der Paßniet seinen kleinsten Durchmesser aufweist und andererseits selbst der stärksten Beanspruchung unterliegt. Eine möglicherweise im Stand der Technik bei der Anordnung von mehr oder weniger auch im Grunddurchmesser der Rillen scharfkantigen, V-förmigen Rillen auftretende Kerbwirkung wird durch die gerundete Formgebung in Verbindung mit der Kaltverfestigung beseitigt bzw. in ihren schädlichen Folgen gemindert. Die Kaltverfestigung erbringt zugleich eine Glättung und Einebnung der Oberfläche an dieser Stelle, so daß das Material des Schließrings an dieser Stelle eine geringere Reibung vorfindet und insoweit besser fließen kann. Die Auswirkung dieses zweiten Effekts ist umso größer, je größer der kaltverfestigte Bereich ist. Es ist also nicht unbedingt sinnvoll, nur einen kleinen Teil der Oberfläche der ersten Rille im Bereich des Grunddurchmessers kaltzuverfestigen; die Kaltverfestigung kann vielmehr auch die Nachbarbereiche, die nicht mehr zur gerundeten Formgebung des Rillengrunds gehören, erfassen.

So ist es möglich, daß der sich an den Grunddurchmesser der ersten Rille in Richtung auf den Kopf anschließende Übergangsbereich des Schafts ebenfalls kaltverfestigt ist. Die Kaltverfestigung kann durchgehend vom Grunddurchmesser der ersten Rille bis zu einer gewissen Tiefe der Schaftlänge vorgesehen sein, also in einen Bereich, in welchem der zylindrische Teil des Schafts bereits erreicht ist.

Auch der Übergangsbereich zwischen der ersten Rille und dem sich in Richtung auf den Kopf des Paßniets anschließenden Schaft kann eine aus mehreren Radien zusammengesetzte Formgebung aufweisen. Damit kann auch hier eine gerundete Formgebung z. B. nach Art eines Korbbogens vorgesehen sein. Die Formgebung kann das Ergebnis einer spanenden und einer nicht-spanenden Formgebung sein, wobei gleichzeitig mit der nicht-spanenden Formgebung auch die Kaltverfestigung erreicht wird. Mit dieser Ausbildung werden nicht nur die bisher beschriebenen Vorteile erreicht. Es ergibt sich der weitere Vorteil, daß das Einpressen des Schafts des Paßniets in die Bohrung der zu verbindenden Bauteile erleichtert wird. Durch die Kaltverfestigung wird die Oberfläche glatter und die Reibung beim Einpressen in die Bohrung der Bauteile geringer. Gleichzeitig wird damit auch eine Beschädigung der Bohrung während des Einpreßvorgangs vermieden. Solche Beschädigungen durch Riefenbildung sind im Stand der Technik bekannt. Durch die Kaltverfestigung werden weiterhin vorteilhaft ganz allgemein Form- und Oberflächenfehler, auch im Bereich von Toleranzen, im Übergangsbereich des Schafts zur ersten Rille beseitigt und damit die dynamische Tragfähigkeit in diesem Bereich der Struktur erhöht.

Der oder die kaltverfestigten Bereiche können gewalzt sein. Ein solcher Walzvorgang stellt einen besonders einfachen und wirkungsvollen Bearbeitungsschritt dar, um die Kaltverfestigung zu erzielen.

Auch die Oberfläche aller oder einiger der sich an die erste Rille anschließenden Rillen können vor oder nach einer Wärmebehandlung spanlos umgeformt sein. Damit werden im wesentlichen die Fließbedingungen des Werkstoffs des Schließrings in diesem Bereich des Schließteils verbessert. Es ist aber auch möglich, daß die Oberfläche im Bereich der ersten Rille eine glatte und im Bereich der anschließenden Rillen eine rauhe Struktur aufweist. Die glatte und die rauhe Struktur können durch Walzen erzielt werden. Die glatte Struktur begünstigt ein besseres Einformen des Materials des Schließrings in die Rillen des Schließteils. Die rauhe Struktur dient der Erhöhung der Übertragbarkeit der Haltekräfte im Bereich der sich an die erste Rille anschließenden Rillen. Umgekehrt ist es auch weiterhin möglich, daß die Oberfläche im Bereich der ersten Rille eine glatte und im Bereich der anschließenden Rillen eine noch glattere Struktur aufweist. Beide Strukturen können durch Walzen bzw. durch Kaltverfestigung erzielt werden und begünstigen das Fließen des Materials des Schließrings auch im Bereich der weiteren Rillen.

Außer dem Walzen bestehen jedoch auch noch andere Realisierungsmöglichkeiten für die Kaltverfestigung. So können der oder die kaltverfestigten Bereiche auch durch Kugelstrahlen erzeugt sein. Bei Verwendung von kugelförmigem Strahlmaterial wird die Oberfläche geglättet und kaltverfestigt. Bei Verwendung von scharfkantigem, splittrigem Strahlmaterial wird die Oberfläche aufgerauht.

Die Erfindung wird anhand verschiedener Ausführungsbeispiele weiter erläutert und beschrieben. Die Zeichnungen zeigen in
- Figur 1: eine Prinzipsskizze mit mehreren Schritten entsprechend dem Setzvorgang eines Paßniets,
- Figur 2: eine Schnittdarstellung zur Verdeutlichung der Verformung des Schließrings vor und nach dem Setzen,
- Figur 3: eine Detaildarstellung des Paßniets als Abreißtyp und
- Figur 4: eine Detaildarstellung des Paßniets als Preßtyp.

Der Paßniet wird durch eine vorbereitete Bohrung in den zu verbindenden Bauteilen 1 und 2 hindurchgeführt. Er besitzt einen glatten, weitgehend zylindrischen Schaft 3, der an seinem einen Ende in einen Kopf 4 übergeht. Am anderen Ende des Schafts 3 geht das Material des Paßniets in einen Schließteil 5 über, der mit Rillen 9 versehen ist. Mit dem Schließteil 5 arbeitet ein Schließring 6 zusammen, der aus gut verformbarem, fließendem Werkstoff, beispielsweise Aluminium, besteht und der beim Setzen des Paßniets mit der Verformung des Schließrings 6 in die Rillen 9 des Schließteils 5 einfließt. An den Schließteil 5 schließt sich über eine Abreißrille 7, die eine Sollbruchstelle bildet, ein Abreißteil 8 an. Das Abreißteil 8 ist mit Gewinde oder mit Eindrehungen versehen, die dem Ansetzen eines Spannwerkzeugs dienen.

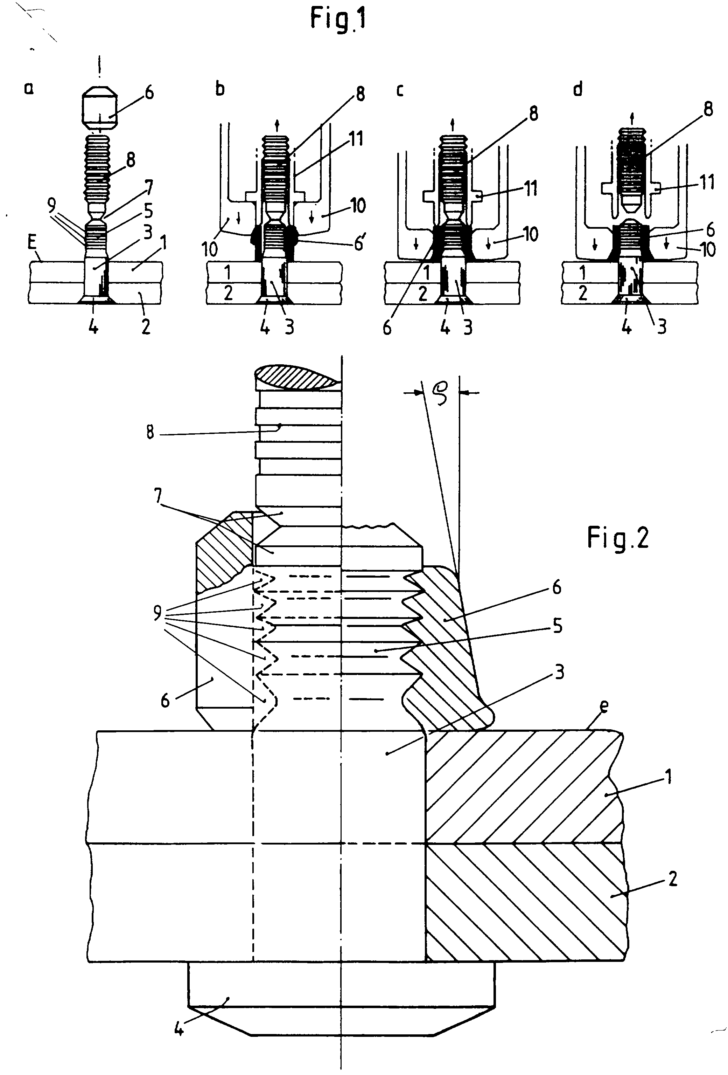

Der Vorgang des Setzens des Paßniets wird durch die Folge der Figuren 1a bis 1d verdeutlicht. Gemäß Figur 1a wird der Paßniet mit seinem Schaft 3 in die Bohrung der Bauteile 1, 2 eingeführt, bis er sich mit seinem Kopf 4 auf oder an das Bauteil 2 anlegt. Dann wird der Schließring 6 aufgesteckt. Dieser weist eine das Aufsetzen auf den Paßniet gestattende Bohrung auf. Gemäß Figur 1b wird ein Spannwerkzeug mit seinen Spannbacken 10 zur Einwirkung gebracht. Dabei umschließt eine Spannbuchse 11 den Abreißteil 8. Vermittels des Spannwerkzeugs wird eine starke Zugspannung auf den Paßniet ausgeübt, wobei gleichzeitig der Schließring 6 derart verformt wird, daß dessen Material fließt und auch in die Rillen 9 des Schließteils 5 eingepreßt wird. Dies ist in Figur 1c ersichtlich. Sobald dabei die Spannung, die für das Setzen des Paßniets erforderlich ist, überschritten wird, ist die Verformung des Schließrings 6 beendet und der Abreißteil 8 reißt im Bereich der Abreißrille 7 durch, wie dies Figur 1d verdeutlicht.

Figur 2 zeigt in vergrößerter Darstellung Einzelheiten der Ausbildung und des Zusammenwirkens des Paßniets im Bereich des Schließteils 5 und des Schließrings 6. In der linken Halbdarstellung ist der Schließring vor seiner Verformung und in der rechten Darstellung nach seiner Verformung erkennbar. Der Schließring 6 verformt sich dabei aus einer etwa zylindrischen Ausgangsgestalt in eine konische Gestalt, wobei sein Material im Bereich einer Anlagefläche e wulstartig nach außen fließt. Während des Setzvorgangs steht der Schließring 6 bis zu seiner vollständigen Verformung unter allseitigen Druckspannungen. In dem Augenblick, in welchem das Abreißteil 8 abreißt und das Spannwerkzeug zurückgenommen wird, entspannt sich der Schließring 6 nach allen Seiten. Hierdurch wird auch zwischen dem Paßniet im Festsetzungsbereich eine Entlastung ausgelöst, wobei die aufgebrachte Vorspannkraft etwas abnimmt. Bei dem zu erwartenden Setzen der Gesamtverbindung wird der Schließring 6 zusätzlich weiter entlastet, wodurch er etwas auffedert und sich der Verformungswinkel ρ verkleinert.

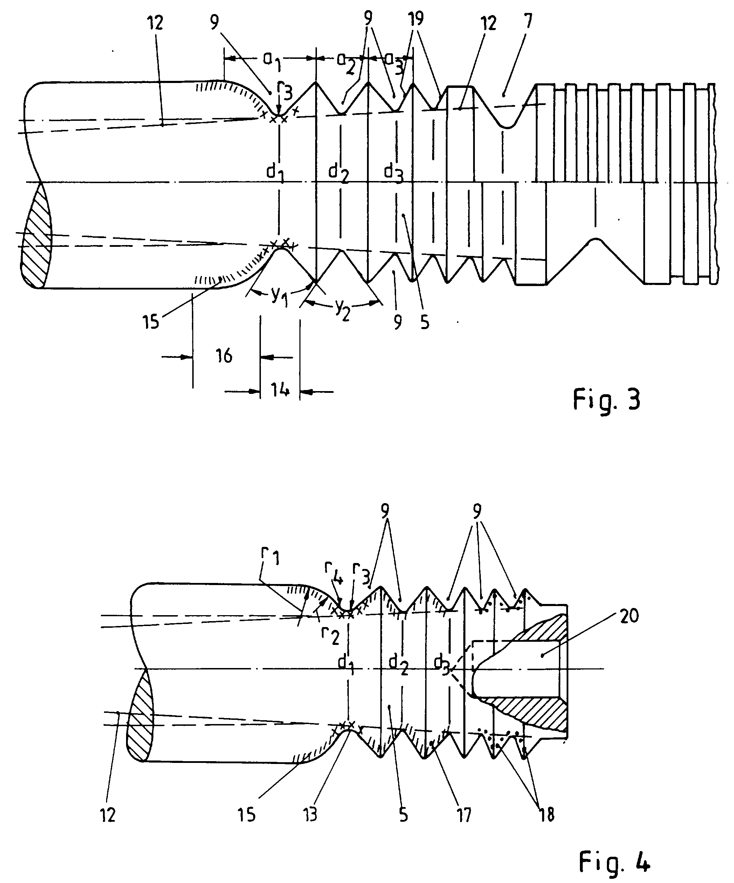

Die Figuren 3 und 4 zeigen weitere wesentlichen Einzelheiten des Paßniets, und zwar Figur 3 zwei Halbschnitte verschieden langer Paßniete nach dem Abreißtyp und Figur 4 eine Darstellung eines Paßniets nach dem Preßtyp. Im Bereich des Schließteils 5 sind die Rillen 9, angefangen von einer ersten Rille im Anschluß an den Schaft 3 bis zu einer letzten Rille 9, an die die Abreißrille 7 anschließt, so ausgebildet, daß sich die Grunddurchmesser d1, d2 usw. der aufeinanderfolgenden Rillen vom Kopf 4 bzw. Schaft 3 in Richtung auf das freie Ende des Paßniets hin allmählich vergrößern. Somit kann man an die Durchmesser d1, d2 usw. einen Hüllmantel 12 anlegen, der sich in der angegebenen Richtung, also auf das freie Ende des Paßniets hin, konisch erweitert. Der Rillenprofilwinkel y verkleinert sich in Richtung von y1, y2 usw. auf das Abreißteil 8 hin bzw. zum freien Ende hin. Somit verkleinert sich in dieser Richtung auch die Rillenbreite a in Richtung a1, a2 usw. Die erste Rille 9, die an den Schaft 3 anschließt, weist weitgehend eine symmetrische Form mit etwa V-förmigem Querschnitt auf, wobei dieser Querschnitt etwa symmetrisch zu einer Durchmesserebene gemäß d1 angeordnet ist. In Richtung auf das freie Ende des Paßniets zu besitzen die weiteren Rillen 9 zwar auch etwa einen V-förmigen Querschnitt, dessen Stellung und Anordnung sich jedoch im Sinn einer zunehmenden Asymmetrie verschiebt, dergestalt, daß die Tragflächen 19 mit zunehmender Steilheit im Vergleich zur ersten Rille 9 angeordnet sind. Es kann ein stetiger Übergang in dieser Rillengestaltung von der ersten bis zur letzten Rille 9 vorgesehen sein. Die Dauerhaltbarkeit des Paßniets wird gefördert durch die vergleichsweise große Rillenbreite a1 der ersten Rille 9. Diese ersten Rille 9 weist im Bereich ihres Grunddurchmessers d1 eine gerundete Formgebung gemäß dem Radius r3 (Figur 3) oder mehrerer, aneinander anschließender Radien r3 und r4 (Figur 4) auf. Durch diese gerundete Formgebung wird eine Kerbwirkung im Rillengrund vermieden. Wichtig im Zusammenhang mit der gerundeten Formgebung ist ein kaltverfestigter Bereich 13, der hier durch eine Kreuzdarstellung verdeutlicht ist und etwa eine axiale Länge 14 aufweist. Die gerundete Formgebung in Verbindung mit dem kaltverfestigten Bereich 13 erbringt eine Erhöhung der dynamischen Tragfähigkeit und damit der Dauerhaltbarkeit des Paßniets.

Vorteilhaft ist es, wenn der an den Bereich 13 anschließende Übergangsbereich 15 zum Schaft 3 hin, der durch eine Strichlierung gekennzeichnet ist und eine axiale Länge 16 aufweisen kann, ebenfalls kaltverfestigt ist. Man erkennt, daß sich der Übergangsbereich 15 etwa so weit in den Schaft 3 hinein erstreckt, daß er im zylindrischen Bereich des Schafts 3 endet. Auch die Formgebung in diesem Übergangsbereich 15 kann abgerundet sein, wobei mehrere Radien r1 und r2 aneinander anschließen können, um eine Formgebung ähnlich eines Korbbogens zu erzielen. Diese Ausbildungen sind gültig sowohl für die Ausführungsbeispiel der Figuren 3 und auch 4.

Figur 4 läßt weiterhin erkennen, daß eine Kaltverfestigung, ausgehend von dem Bereich 13, im Grunddurchmesser d1 der ersten Rille 9 auch in den Bereich der weiteren, sich anschließenden Rillen 9 hinein vorgesehen sein kann. Es ist hier ein erster Bereich 17 gestrichelt angedeutet, der an den Bereich 13 der ersten Rille 9 anschließt und sich etwa bis in die dritte Rille 9 hinein erstreckt. Dieser Bereich 17 besitzt, ebenso wie die Bereiche 13 und 15, eine glatte Oberfläche, so daß hier das Einfließen des Materials des Schließrings 6 in die Rille 9 begünstigt wird. Insbesondere ist eine glatte Ausbildung im Übergangsbereich 15 förderlich, weil hier eine Fließbehinderung durch die Auflagefläche e des Bauteils 1 auftritt.

Es ist möglich, insbesondere in dem Bereich der Rillen 9, die dem freien Ende des Paßniets zugekehrt sind, also im Bereich der letzten Rillen 9, einen weiteren kaltverfestigten Bereich 18 vorzusehen, der durch eine Punktdarstellung verdeutlicht ist. Hier empfiehlt es sich, die Kaltverfestigung, die beispielsweise durch einen Walzvorgang oder eine Bestrahlung mit Strahlmaterial realisierbar ist, nicht mit glatter Oberfläche, sondern mit einer rauhen Struktur, herzustellen. Im Bereich dieser letzten Rillen 9 liegt keine Fließbehinderung des Werkstoffs des Schließrings 6 vor, so daß hier das Material ohnehin gut fließt. Durch die rauhe Oberfläche im Bereich 18, insbesondere an den Tragflächen, wird die übertragbare Vorspannkraft erhöht. Es versteht sich, daß bei dem Ausführungsbeispiel der Figur 4 das Schließwerkzeug im Bereich einer Bohrung 20 angreift.

### Bezugszeichenliste :

- 1: = Bauteil
- 2: = Bauteil
- 3: = Schaft
- 4: = Kopf
- 5: = Schließteil
- 6: = Schließring
- 7: = Abreißrille
- 8: = Abreißteil
- 9: = Rillen
- 10: = Spannbacken
- 11: = Spannbuchse
- 12: = Hüllmantel
- 13: = kaltverfestigter Bereich
- 14: = axiale Länge
- 15: = Übergangsbereich
- 16: = axiale Länge
- 17: = Bereich
- 18: = Bereich
- 19: = Tragflächen
- 20: = Bohrung

## Patentansprüche

1. Paßniet für hochbeanspruchte Nietverbindungen, der einen in seiner Länge auf die Dicke der beiden zu verbindenden Bauteile abgestimmten Schaft und daran anschließend einen mit einem Schließring zusammenwirkenden Schließteil mit auf dem Umfang vorgesehenen, im wesentlichen V-förmigen Rillen aufweist, wobei sich ein die Grunddurchmesser der Rillen verbindender Hüllmantel vom Kopf des Paßniets in Richtung auf sein entgegengesetztes freies Ende hin konisch erweitert und die Rillen auf dem Schließteil in der gleichen Richtung abnehmende Rillenbreite und zunehmende Asymmetrie des Rillenprofils aufweisen, wobei eine am Schließteil (5) des Paßniets im Anschluß an den Schaft (3) in Richtung auf sein freies Ende angeordnete erste Rille (9) im Bereich ihres Grunddurchmessers (d1) eine aus einem oder mehreren Radien bestehende, gerundete Formgebung (r3, r4) aufweist, deren Bereich (13) kaltverfestigt ist.

2. Paßniet nach Anspruch 1, dadurch gekennzeichnet, daß der sich an den Grunddurchmesser (d1) der ersten Rille (9) in Richtung auf den Kopf (4) anschließende Übergangsbereich (15) des Schafts (3) kaltverfestigt ist.

3. Paßniet nach Anspruch 2, dadurch gekennzeichnet, daß der Übergangsbereich (15) eine aus mehreren Radien(r1, r2) zusammengesetzte Formgebung aufweist.

4. Paßniet nach Anspruch 2 oder 3, dadurch gekennzeichnet, daß die kaltverfestigten Bereiche (13, 15) gewalzt sind.

5. Paßniet nach einem der Ansprüche 1 bis 4, dadurch gekennzeichnet, daß die Oberfläche aller oder einiger der sich an die erste Rille (9) anschließenden Rillen (9) vor oder nach einer Wärmebehandlung spanlos umgeformt sind.

6. Paßniet nach Anspruch 5, dadurch gekennzeichnet, daß die Oberfläche im Bereich der ersten Rille (9) eine glatte und im Bereich der anschließenden Rillen (9) eine rauhe Struktur aufweist.

7. Paßniet nach Anspruch 5, dadurch gekennzeichnet, daß die Oberfläche im Bereich der ersten Rille (9) eine glatte und im Bereich der anschließenden Rille (9) eine noch glattere Struktur aufweist.

8. Paßniet nach einem der Ansprüche 1 bis 7, dadurch gekennzeichnet, daß der oder die kaltverfestigten Bereiche durch Kugelstrahlen erzeugt sind.

## Claims

1. A calibrated rivet for highly stressed riveted joints possessing a shank whose length is harmonized with the two members to be joined, followed by a retaining element interacting with a retaining collar and provided with basically V-shaped grooves on its circumference, whereby an enveloping jacket that links the root diameters of the grooves widenes conically from the head of the calibrated rivet toward its opposite free end, and the grooves on the retaining element possess decreasing groove width and increasing asymmetry of the groove profile in the same direction, wherein a first groove (9), located on the retaining element (5) of the calibrated rivet that follows the shank (3) in the direction toward its free end, possesses a rounded shaping (r3, r4) being composed of one or more radii in the area of its root diameter (d1) whose area (13) is strain-hardened.

2. The calibrated rivet as claimed in claim 1, **characterized** in that the transision area (15) of the shank (3) following after the root diameter (dl) of the first groove (9) in the direction of the head (4) is strain-hardened.

3. The calibrated rivet as claimed in claim 2, **characterized** in that the transision area (15) possesses a shaping being composed of several radii (r1, r2).

4. The calibrated rivet as claimed in claims 2 or 3, **characterized** in that the strain-hardened areas (13, 15) are rolled.

5. The calibrated rivet as claimed in one of claims 1 to 4, **characterized** in that also the surface of all or some of the grooves (9) following the first groove (9) are formed prior to or after a heat treatment.

6. The calibrated rivet as claimed in claim 5, **characterized** in that the surface in the area of the first groove (9) has smooth texture and in the area of the subsequent grooves (9) coarse texture.

7. The calibrated rivet as claimed in claim 5, **characterized** in that the surface in the area of the first groove (9) has smooth texture and in the area of the subsequent groove (9) an even smoother texture.

8. The calibrated rivet as claimed in one of claims 1 to 7, **characterized** in that the strain-hardened areas are produced by shot-peening.

## Revendications

1. Rivet calibré pour assemblages rivés fortement sollicités, qui présente une tige adaptée dans sa longueur à l'épaisseur des deux composants à assembler et, raccordée à celle-ci, une partie de fermeture coopérant avec un anneau de fermeture avec des gorges essentiellement en V prévues sur le pourtour, une enveloppe reliant les diamètres de base des gorges s'élargissant coniquement de la tête du rivet calibré en direction de son extrémité libre opposée et les gorges présentant sur la partie de fermeture une largeur diminuant dans le même sens et une asymétrie croissante du profil des gorges, dans lequel une première gorge (9), située sur la partie de fermeture (5) du rivet calibré, à la suite de la tige (3), en direction de son extrémité libre, présente, dans la région de son diamètre de base (d1) une forme (r3, r4) arrondie, constituée d'un ou de plusieurs rayons, dont la zone (13) est écrouie.

2. Rivet calibré selon la revendication 1, caractérisé en ce que la zone de transition (15) de la tige (3), faisant suite au diamètre de base (d1) de la première gorge (9), en direction de la tête (4), est écrouie.

3. Rivet calibré selon la revendication 2, caractérisé en ce que la zone de transition (15) présente une forme composée de plusieurs rayons (r1, r2).

4. Rivet calibré selon la revendication 2 ou 3, caractérisé en ce que les zones écrouies (13, 15) sont laminées.

5. Rivet calibré selon l'une des revendications 1 à 4, caractérisé en ce que la surface de toutes ou de quelques gorges (9), se raccordant à la première gorge (9), est déformée sans copeaux avant ou après un traitement thermique.

6. Rivet calibré selon la revendication 5, caractérisé en ce que la surface présente, dans la région de la première gorge (9), une structure lisse et dans la région des gorges (9) suivantes, une structure rugueuse.

7. Rivet calibré selon la revendication 5, caractérisé en ce que la surface présente dans la région de la première gorge (9), une structure lisse et dans la région de la gorge (9) suivante, une structure encore plus lisse.

8. Rivet calibré selon l'une des revendications 1 à 7, caractérisé en ce que la ou les zones écrouies sont produites par grenaillage.
